# EUROPÄISCHE PATENTSCHRIFT

(11) **EP 2 452 416 B1**
(45) Veröffentlichungstag und Bekanntmachung des Hinweises auf die Patenterteilung: **28.01.2015**
(21) Anmeldenummer: 10716358.6
(22) Anmeldetag: 06.05.2010
(51) Int. Cl.: H02K 3/14, H02K 3/04

(54) **ELEKTRISCHE MASCHINE SOWIE VERFAHREN ZUR HERSTELLUNG DER ELEKTRISCHEN MASCHINE MIT ZUMINDEST EINER WICKELUNG**
ELECTRIC MACHINE AND METHOD FOR PRODUCING THE ELECTRIC MACHINE HAVING AT LEAST ONE WINDING
MACHINE ÉLECTRIQUE ET PROCÉDÉ DE PRODUCTION DE LA MACHINE ÉLECTRIQUE DOTÉ D'AU MOINS UN BOBINAGE

(30) Priorität: 06.07.2009 DE 102009027467
(43) Veröffentlichungstag der Anmeldung: 16.05.2012
(73) Patentinhaber: Robert Bosch GmbH, 70442 Stuttgart (DE)
(72) Erfinder: ZIERER, Gerald, 76437 Rastatt-Wintersdorf (DE); GAIDA, Cornelius, 70439 Stuttgart (DE); HUBER, Michael, 77836 Rheinmuenster (DE)
(86) Internationale Anmeldenummer: PCT/EP2010/056142
(87) Internationale Veröffentlichungsnummer: WO 2011/003642

(56) Entgegenhaltungen:
- EP-A1- 1 296 336
- DE-A1- 2 455 001
- DE-A1- 3 241 506
- DE-A1- 10 313 148
- DE-U1- 29 708 729
- FR-A1- 2 533 744

## Beschreibung

### Stand der Technik

Die vorliegende Erfindung betrifft eine elektrische Maschine mit zumindest einer Wickelung, umfassend zumindest einen Wickeldraht sowie ein Verfahren zur Herstellung dieser elektrischen Maschine.

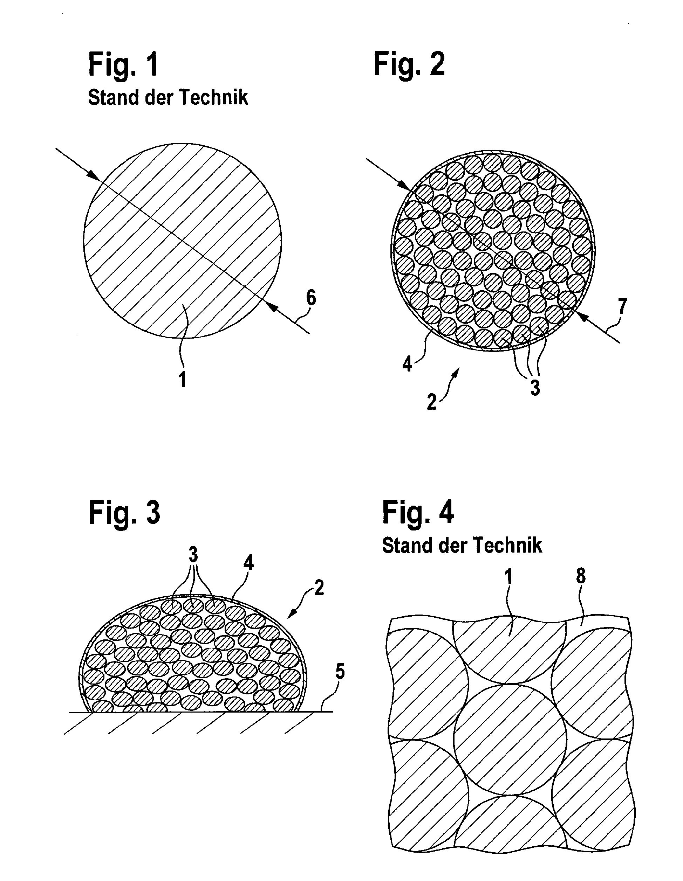

Beim Bewickeln von elektrischen Maschinen nach Stand der Technik, z.B. EC-Statoren oder DC-Ankern, wird einsträngiger Kupferlackdraht mit-rundem Querschnitt verwendet. Dieser Kupferlackdraht, wie er in elektrischen Maschinen nach dem Stand der Technik verwendet wird, begrenzt den theoretisch erreichbaren Füllfaktor aufgrund der entstehenden nicht nutzbaren Zwischenräume. Die Figuren 1 und 4 zeigen den Stand der Technik. Figur 1 zeigt einen Querschnitt eines herkömmlichen Wickeldrahtes 1 mit einem ersten Durchmesser 6. Wird dieser Wickeldraht gewickelt, so entsteht der Querschnitt einer Wickelung, wie ihn Figur 4 zeigt. In Figur 4 ist gut zu sehen, dass zwischen den herkömmlichen Wickeldrähten 1 große Zwischenräume 8 entstehen.
Mit zunehmendem ersten Durchmesser 6 wird der herkömmliche Wickeldraht 1 steifer und die Wickelbarkeit wird entsprechend schwieriger. Durch den steifen herkömmlichen Wickeldraht 1 und die nicht nutzbaren Zwischenräume 8 werden die Wickelkopfhöhen größer. Im Stand der Technik wird nun, um den Kupferfüllfaktor zu erhöhen, alternativ zum runden herkömmlichen Wickeldraht 1 ein Profildraht verwendet. Die Nachteile bezüglich Steifigkeit und ungünstiger Wickelbarkeit verstärken sich jedoch bei Verwendung des Profildrahtes zusätzlich.

Die DE2455001A1 zeigt eine Wickelanordnung, mit einer Ansammlung vieler miteinander verdrillter Adern, wobei jeder der Adern eine Vielzahl von dünnen isolierten Drähten aufweist. Die Adern sind in entgegengesetzter Richtung verdrillt. Dies führt zu einer Verringerung von Störungen in der elektrischen Maschine.

### Offenbarung der Erfindung

Die erfindungsgemäße elektrische Maschine mit den Merkmalen des Anspruchs 1 ermöglicht es, den Füllfaktor, insbesondere Kupferfüllfaktor der elektrischen Maschine entscheidend zu erhöhen. Dies wird dadurch erreicht, dass die Zwischenräume, die bei einem herkömmlichen Wickeldraht nach dem Stand der Technik entstehen, bei Verwendung des erfindungsgemäßen Wickeldrahtes mit einer Vielzahl einzelner Litzen ausgenutzt werden. Des Weiteren wird durch die Verwendung des erfindungsgemäßen Wickeldrahtes eine Ausbauchung der Wicklung in der Mitte langer Spulen reduziert. Ferner ist bei der erfindungsgemäßen elektrischen Maschine die Wickelkopfhöhe reduziert. Der erfindungsgemäß verwendete Wickeldraht mit einer Vielzahl einzelner Litzen legt sich enger um das zu bewickelnde Bauteil, so dass die Fülldichte bzw. der Füllfaktor erhöht werden und folglich die Wickelkopfhöhe reduziert werden kann. Ein weiterer entscheidender Vorteil der elektrischen Maschine mit den Merkmalen des Anspruchs 1 ist, dass die Wickel- und Biegekräfte reduziert werden können. Dadurch können zu bewickelnde Bauteile kleiner dimensioniert werden und Wickelwerkzeuge können kleiner ausgelegt werden. Dies hat insbesondere vorteilhafte Auswirkungen auf den Kommutatorhaken, die Isoliermasken sowie eine Düsenbreite beim Nadelwickeln. Folglich kann die Wickelung genauer erfolgen, wodurch wiederum der Füllfaktor steigt. Des Weiteren kann die Wickelgeschwindigkeit erhöht werden. Ein weiterer Vorteil ergibt sich bei der zum Teil notwendigen nachträglichen Umformung der Wickelung. Die erforderlichen Kräfte sowie die Drahtbelastung beim Kalibrieren bzw. Nachdrücken des Wickelkopfes sowie bei Positionsveränderungen des Kommutators nach Schweißen und beim Kommutatorschieben werden verringert. All diese Vorteile werden ermöglicht durch eine elektrische Maschine mit zumindest einer Wickelung, umfassend zumindest einen Wickeldraht, wobei der Wickeldraht eine Vielzahl von einzelnen, elektrisch leitfähigen Litzen umfasst, und wobei der Wickeldraht eine alle Litzen umhüllende elektrisch isolierende Außenhülle umfasst. Der Wickeldraht ist somit ein Drahtverbund einzelner Litzen. Es ist vorgesehen, dass der gewickelte Wickeldraht zu einem ellipsenförmigen Drahtquerschnitt verformt ist, um die Fülldichte der Wickelung zu erhöhen. Vor der Wickelung hat der Wickeldraht im Wesentlichen einen kreisrunden Querschnitt. Dank der einzelnen Litzen kann der Wickeldraht mit relativ geringen Kräften beim Wickeln der Wickelung verformt werden. Dabei wird der runde Querschnitt des Wickeldrahtes in eine elliptische Form gebracht, so dass die Zwischenräume in der Wickelung reduziert werden. Die im Rahmen diesen Anmeldung diskutierte "Ellipsenform" bzw. der "ellipsenförmige" Wickeldrahtoder Litzenquerschnitt sind nicht auf die reine Ellipse mit symmetrischer Gestalt bezüglich der großen und kleinen Achse beschränkt. Vielmehr sind bevorzugte ellipsenförmige Ausgestaltungen im Rahmen dieser Anmeldung sämtliche gestreckten und gestauchten Kreise. Insbesondere sind auch Abflachungen bestimmter Umfangabschnitte der Ellipse mit inbegriffen. Solche Abflachungen entstehen vor allem wenn der Wickeldraht in der Wickelung auf sich selbst oder auf dem Anker oder Stator aufliegt.

Die Unteransprüche zeigen bevorzugte Weiterbildungen der Erfindung.

In weiterer vorteilhafter Ausgestaltung ist vorgesehen, dass die einzelnen Litzen des gewickelten Wickeldrahtes zu einem ellipsenförmigen Litzenquerschnitt verformt sind, um die Fülldichte der Wickelung weiter zu erhöhen. So werden nicht nur die Zwischenräume außerhalb der Außenhülle des Wickeldrahtes durch eine elliptische Verformung reduziert, sondern auch die Zwischenräume, welche sich zwischen den einzelnen Litzen innerhalb des Wickeldrahtes bilden werden, durch Deformation der einzelnen Litzen möglichst verringert.

Des Weiteren ist es bevorzugt, dass die Litzen des zumindest einen Wickeldrahtes zueinander nicht isoliert sind. Dadurch definiert sich die leitende Querschnittsfläche des Wickeldrahtes durch die Summe aller einzelnen Querschnitte der Litzen.

Des Weiteren ist es bevorzugt, dass die Litzen durchgehend verlaufen und genauso lang sind wie der Wickeldraht. Die Litzen sind somit bevorzugt keine einzelnen Bruchstücke, sondern durchgehende Leiter. Des Weiteren sind die Litzen im Wesentlichen parallel zueinander ausgerichtet und nicht miteinander verdrillt. Dadurch ist die Deformation sowohl des Wickeldrahtes als auch der einzelnen Litzen bei der Wickelung gut möglich.

Weiter vorteilhaft ist es, dass die Litzen derart in der Außenhülle angeordnet sind, dass die Litzen eine Relativbewegung zueinander ausführen können. Die Litzen sind somit in loser, d.h. nicht miteinander verbundener Form, in der Außenhülle angeordnet, wobei sich benachbarte Litzen berühren, jedoch relativ zueinander beweglich sind. Dadurch können sich die Litzen bei der Wickelung derart Positionieren und Verformen, dass Zwischenräume möglichst gut ausgefüllt werden.

In einer weiteren vorteilhaften Ausgestaltung ist vorgesehen, dass der Wickeldraht aus zumindest 50 oder zumindest 100 oder zumindest 150 oder zumindest 200 Litzen besteht. Die Anzahl der Litzen sollte möglichst groß gewählt werden, um die Vorteile des erfindungsgemäßen Wickeldrahtes und insbesondere das sehr flexible Anpassen des Wickeldrahtes an die Wickelung sowie die Reduzierung der Drahtbeanspruchung zu erreichen. Es ist zu beachten, dass die elektrischen Eigenschaften durch die Substitution des vorbekannten Wickeldrahtes mit dem erfindungsgemäßen Wickeldraht aus einzelnen Litzen nicht verändert werden darf. Der resultierende Leiterquerschnitt muss gleichbleiben. D.h., dass die Anzahl der einzelnen Litzen sowie deren Querschnittsfläche bevorzugt so gewählt wird, dass eine Summe der einzelnen Querschnittsflächen aller Litzen gleich der Querschnittsfläche des runden vorbekannten Wickeldrahtes ist. Selbstverständlich muss die Gesamtquerschnittsfläche entsprechend den Konstruktionsanforderungen der elektrischen Maschine gewählt werden. Bevorzugte Litzendurchmesser sind bis zu 0,1 mm oder bis zu 0,2 mm oder bis zu 0,3 mm.

Des Weiteren ist es bevorzugt, dass die Litzen aus Kupfer oder Alu bestehen. Selbstverständlich sind damit auch Legierungen umfasst, welche im Wesentlichen aus Kupfer oder Alu bestehen.

Des Weiteren ist es von Vorteil, dass die Außenhülle eine extrudierte Außenhülle, insbesondere aus Ethylen-Tetrafluorethylen (ETFE), und/oder eine Kunststoffumspritzung und/oder eine Lackierung ist. Die Außenhülle hat vergleichbare elektrische und mechanische Eigenschaften wie die Lackschicht des vorbekannten Wickeldrahtes mit rundem Querschnitt. Ebenso ist die Wandstärke der Außenhülle bevorzugt nicht größer als der Lackauftrag des vorbekannten Wickeldrahtes.

In bevorzugter Ausgestaltung ist vorgesehen, dass sich auf der Außenhülle und/oder zwischen den Litzen ein Gleitmittel befindet. Das Gleitmittel zwischen den Litzen erhöht erheblich die Flexibilität und die Umformbarkeit des Wickeldrahtes. Durch ein Gleitmittel auf der Außenhülle können insbesondere die Wickelkräfte reduziert werden und der gesamte Wickeldraht deformiert sich leichter, um die Zwischenräume außerhalb der Außenhülle auszufüllen. Anstatt oder zusätzlich zum Gleitmittel auf der Außenhülle ist auch ein Lack auf der Außenhülle denkbar, welcher ebenfalls die Gleiteigenschaften verbessert.

Die Außenhülle weist bevorzugt eine axiale Dehnbarkeit von zumindest 20 % auf, um die Dehnung beim Wickeln zu gewährleisten. Eine tangentiale Dehnbarkeit liegt bevorzugt bei zumindest 40 %. Die Wanddicke der Außenhülle beträgt bevorzugt zwischen 25 und 35 µm, insbesondere 30 µm. Die Isolationsfestigkeit der Außenhülle ist bevorzugt zumindest 500 V. Die Einsatztemperatur der Außenhülle reicht bevorzugt bis zu 180°C.

Die Erfindung umfasst des Weiteren einen Verstellmotor zum Antrieb eines verstellbaren Elementes eines Kraftfahrzeugs, umfassend eine soeben beschriebene elektrische Maschine. Die vorteilhaften Ausgestaltungen, wie sie im Rahmen der elektrischen Maschine diskutiert werden, finden entsprechende, bevorzugte Anwendung auf den erfindungsgemäßen Verstellmotor. Bevorzugt sind Verstellmotoren für die Einstellung des Sitzes und/oder zum Antrieb eines Fensterhebers und/oder zum Antrieb eines Schiebedaches einzusetzen.

Des Weiteren umfasst die Erfindung einen Antrieb für ein Nebenaggregat eines Kraftfahrzeugs, umfassend eine soeben beschriebene elektrische Maschine. Die vorteilhaften Ausgestaltungen der elektrischen Maschine finden entsprechende, bevorzugte Anwendung auf den erfindungsgemäßen Antrieb für das Nebenaggregat. Bevorzugte Nebenaggregate sind die Antriebe für das Lüfterrad und/oder den Klimaanlagenkompressor eines Fahrzeugs.

Ferner umfasst die Erfindung eine Motor-/Generatoreinheit zum Antrieb eines Kraftfahrzeugs, insbesondere eines hybrid-getriebenen Kraftfahrzeugs, umfassend eine soeben beschriebene elektrische Maschine. Die vorteilhaften Ausgestaltungen, wie sie im Rahmen der elektrischen Maschine diskutiert wurden, finden entsprechende, bevorzugte Anwendung auf die erfindungsgemäße Motor-/Generatoreinheit. Insbesondere dient die elektrische Maschine im Hybridfahrzeug zusammen mit einem Verbrennungsmotor als Antriebseinheit für das Kraftfahrzeug.

Der erfindungsgemäße Wickeldraht wird bevorzugt auf EC-Statoren und/oder DC-Anker gewickelt.

Des Weiteren umfasst die Erfindung ein Verfahren zur Herstellung einer elektrischen Maschine mit zumindest einer Wickelung, umfassend die folgenden Schritte: Bereitstellen eines Wickeldrahtes umfassend eine Vielzahl von einzelnen, elektrisch leitfähigen Litzen, Aufbringen einer alle Litzen umhüllenden elektrisch isolierenden Außenhülle, und Wickeln des Wickeldrahtes zur Herstellung der Wickelung der elektrischen Maschine, wobei eine Zugbelastung des Wickeldrahtes beim Wickeln derart gewählt wird, dass sich ein Querschnitt des Wickeldrahtes und/oder der Litzen von einer Kreisform zur Ellipse verformt um die Fülldichte der Wickelung zu erhöhen. Die vorteilhaften Ausgestaltungen, wie sie im Rahmen der elektrischen Maschine diskutiert wurden, finden entsprechende, bevorzugte Anwendung auf das erfindungsgemäße Verfahren. Weiter vorteilhaft ist es, dass die Litzen derart in der Außenhülle angeordnet sind, dass die Litzen eine Relativbewegung zueinander ausführen. Die Litzen sind somit in loser, d.h. nicht miteinander verbundener Form, in der Außenhülle angeordnet, wobei sich benachbarte Litzen berühren, jedoch relativ zueinander beweglich sind. Dadurch können sich die Litzen bei der Wickelung derart Positionieren und Verformen, dass Zwischenräume möglichst gut ausgefüllt werden. Des Weiteren sind die Litzen des zumindest einen Wickeldrahtes zueinander nicht isoliert. Dadurch definiert sich die leitende Querschnittsfläche des Wickeldrahtes durch die Summe aller einzelnen Querschnitte der Litzen.

### Kurze Beschreibung der Zeichnung

Nachfolgend wird ein Ausführungsbeispiel der Erfindung unter Bezugnahme auf die begleitende Zeichnung im Detail beschrieben. In der Zeichnung zeigt:
- Figur 1: einen Querschnitt eines Wickeldrahts gemäß dem Stand der Technik,
- Figur 2: einen erfindungsgemäß verwendeten Wickeldraht vor der Wickelung gemäß Ausführungsbeispiel,
- Figur 3: den erfindungsgemäß verwendeten Wickeldraht nach der Wickelung gemäß Ausführungsbeispiel, und
- Figur 4: einen Querschnitt einer Wickelung gemäß dem Stand der Technik.

### Ausführungsform der Erfindung

Die Figuren 2 und 3 zeigen einen Querschnitt eines Wickeldrahtes 2 gemäß dem Ausführungsbeispiel. Der Wickeldraht 2 umfasst eine Vielzahl einzelner Litzen 3 und ist umhüllt von einer zylindrischen Außenhülle 4 aus Ethylen-Tetrafluorethylen. Die einzelnen Litzen 3 sind dabei im Wesentlichen parallel zueinander angeordnet und erstrecken sich über die gesamte Länge des Wickeldrahtes 2.

Die Figur 2 zeigt den Querschnitt des Wickeldrahtes 2, bevor dieser gewickelt wurde. Dabei sind sowohl die Querschnitte der einzelnen Litzen 3 als auch der Gesamtquerschnitt des Wickeldrahtes 2 mit der Außenhülle 4 kreisförmig. Der gesamte Wickeldraht 2 hat dabei den zweiten Durchmesser 7.

Figur 3 zeigt den Querschnitt des Wickeldrahtes 2, nachdem dieser um einen Anker 5 gewickelt wurde. Der Querschnitt des Wickeldrahtes 2 sowie seine Außenhülle 4 wurden aus dem kreisförmigen Querschnitt in einen ellipsenförmigen Querschnitt deformiert. Gleichzeitig wurden auch die einzelnen Querschnitte der einzelnen Litzen 3 aus einem kreisförmigen Querschnitt in einen ellipsenförmigen Querschnitt deformiert. Durch diese Deformation kann der Wickeldraht 2 sehr viel enger gewickelt werden, so dass die vorbekannten großen Zwischenräume 8 weitgehend vermieden werden. Innerhalb des Wickeldrahtes 2 entsteht durch die Deformation der einzelnen Litzen 3 zu einem ellipsenförmigen Querschnitt ein relativ kompakter Leiter. Dadurch, dass die einzelnen Litzen 3 relativ zueinander gleiten können, kann die Wicklung mit geringen Wickelkräften hergestellt werden.

Damit ein gesamter Leiterquerschnitt des Wickeldrahtes 2 identisch ist mit dem Querschnitt des herkömmlichen Wickeldrahtes 1, wird beispielsweise ein herkömmlicher Wickeldraht 1 mit erstem Durchmesser 6 von 1 mm durch einen erfindungsgemäßen Wickeldraht 2 mit 100 Litzen und einem Durchmesser der einzelnen Litzen von 0,1 mm ersetzt.

Der vorgeschlagene Wickeldraht 2 ist leichter wickel- und deformierbar als der herkömmliche Wickeldraht 1. Dadurch reduzieren sich die Wickelkräfte. Ferner deformiert sich der Wickeldraht 2 und die einzelnen Litzen 3, so dass vorbekannte Zwischenräume 8 weitgehend vermieden werden.

## Patentansprüche

1. Elektrische Maschine mit zumindest einer Wickelung umfassend zumindest einen Wickeldraht (2), wobei der Wickeldraht (2) eine Vielzahl von einzelnen, elektrisch leitfähigen Litzen (3) umfasst, und wobei der Wickeldraht (2) eine alle Litzen (3) umhüllende elektrisch isolierende Außenhülle (4) umfasst, **dadurch gekennzeichnet, dass** die einzelnen Litzen (3) des gewickelten Wickeldrahtes (2) zu einem ellipsenförmigen Litzenquerschnitt verformt sind, um die Fülldichte der Wickelung zu erhöhen.

2. Elektrische Maschine nach Anspruch 1, **dadurch gekennzeichnet, dass** der gewickelte Wickeldraht (2) zu einem ellipsenförmigen Drahtquerschnitt verformt ist, um die Fülldichte der Wickelung zu erhöhen.

3. Elektrische Maschine nach einem der vorhergehenden Ansprüche, **dadurch gekennzeichnet, dass** die Litzen (3) des zumindest einen Wickeldrahtes (2) zueinander nicht isoliert sind.

4. Elektrische Maschine nach einem der vorhergehenden Ansprüche, **dadurch gekennzeichnet, dass** die Litzen (3) durchgehend verlaufen und genauso lang sind wie der Wickeldraht (2).

5. Elektrische Maschine nach einem der vorhergehenden Ansprüche, **dadurch gekennzeichnet, dass** die Litzen (3) derart in der Außenhülle (4) angeordnet sind, dass die Litzen (3) eine Relativbewegung zueinander ausführen können.

6. Elektrische Maschine nach einem der vorhergehenden Ansprüche, **dadurch gekennzeichnet, dass** der Wickeldraht (2) aus zumindest 50 oder zumindest 100 oder zumindest 150 oder zumindest 200 Litzen (3) besteht.

7. Elektrische Maschine nach einem der vorhergehenden Ansprüche, **dadurch gekennzeichnet, dass** die Litzen (3) aus Kupfer oder Alu bestehen.

8. Elektrische Maschine nach einem der vorhergehenden Ansprüche, **dadurch gekennzeichnet, dass** die Außenhülle (4) eine extrudierte Außenhülle (4) und/oder eine Kunststoffumspritzung und/oder eine Lackierung ist.

9. Elektrische Maschine nach einem der vorhergehenden Ansprüche, **dadurch gekennzeichnet, dass** sich auf der Außenhülle (4) und/oder zwischen den Litzen (3) ein Gleitmittel befindet.

10. Verstellmotor zum Antrieb eines verstellbaren Elementes eines Kraftfahrzeugs umfassend eine elektrische Maschine nach einem der Ansprüche 1 bis 9.

11. Antrieb für ein Nebenaggregat eines Kraftfahrzeugs umfassend eine elektrische Maschine nach einem der Ansprüche 1 bis 9.

12. Motor-/Generatoreinheit zum Antrieb eines Kraftfahrzeugs, insbesondere eines hybridgetriebenen Kraftfahrzeugs, umfassend eine elektrische Maschine nach einem der Ansprüche 1 bis 9.

13. Verfahren zur Herstellung einer elektrischen Maschine mit zumindest einer Wicklung umfassend die folgenden Schritte:
- Bereitstellen eines Wickeldrahtes (2) umfassend eine Vielzahl von einzelnen, elektrisch leitfähigen und zueinander nicht isolierenden Litzen (3),
- Aufbringen einer alle Litzen (3) umhüllenden elektrisch isolierenden Außenhülle (4), wobei die Litzen (3) derart in der Außenhülle (4) angeordnet werden, dass die Litzen (3) eine Relativbewegung zueinander ausführen können, und
- Wickeln des Wickeldrahtes (2) zur Herstellung der Wickelung der elektrischen Maschine, wobei eine Zugbelastung des Wickeldrahtes (2) beim Wickeln derart gewählt wird, dass sich ein Querschnitt des Wickeldrahtes (2) und/oder der Litzen (3) von einer Kreisform zu einem ellipsenförmigen Querschnitt verformt um die Fülldichte der Wickelung zu erhöhen.

## Claims

1. Electric machine having at least one winding comprising at least one winding wire (2), wherein the winding wire (2) comprises a multiplicity of individual, electrically conductive litz wires (3), and wherein the winding wire (2) comprises an electrically insulating outer sleeve (4) enveloping all of the litz wires (3), **characterized in that** the individual litz wires (3) of the wound winding wire (2) are deformed to give an ellipsoidal litz-wire cross section in order to increase the fill factor of the winding.

2. Electric machine according to Claim 1, **characterized in that** the wound winding wire (2) is deformed to give an ellipsoidal wire cross section in order to increase the fill factor of the winding.

3. Electric machine according to one of the preceding claims, **characterized in that** the litz wires (3) of the at least one winding wire (2) are not insulated from one another.

4. Electric machine according to one of the preceding claims, **characterized in that** the litz wires (3) extend continuously and are precisely as long as the winding wire (2).

5. Electric machine according to one of the preceding claims, **characterized in that** the litz wires (3) are arranged in the outer sleeve (4) in such a way that the litz wires (3) can perform a relative movement with respect to one another.

6. Electric machine according to one of the preceding claims, **characterized in that** the winding wire (2) consists of at least 50 or at least 100 or at least 150 or at least 200 litz wires (3).

7. Electric machine according to one of the preceding claims, **characterized in that** the litz wires (3) consist of copper or aluminium.

8. Electric machine according to one of the preceding claims, **characterized in that** the outer sleeve (4) is an extruded outer sleeve (4) and/or an encapsulation by plastic injection moulding and/or enamelling.

9. Electric machine according to one of the preceding claims, **characterized in that** a lubricant is located on the outer sleeve (4) and/or between the litz wires (3).

10. Servomotor for driving an adjustable element of a motor vehicle, comprising an electric machine according to one of Claims 1 to 9.

11. Drive for an ancillary unit of a motor vehicle, comprising an electric machine according to one of Claims 1 to 9.

12. Motor/generator set for driving a motor vehicle, in particular a hybrid motor vehicle, comprising an electric machine according to one of Claims 1 to 9.

13. Method for producing an electric machine having at least one winding comprising the following steps:
- providing a winding wire (2) comprising a multiplicity of individual, electrically conductive litz wires (3) which are not insulated from one another,
- applying an electrically insulating outer sleeve (4) enveloping all of the litz wires (3), wherein the litz wires (3) are arranged in the outer sleeve (4) in such a way that the litz wires (3) can perform a relative movement with respect to one another, and
- winding the winding wire (2) for producing the winding of the electric machine, wherein tensile loading of the winding wire (2) during winding is selected such that a cross section of the winding wire (2) and/or the litz wires (3) is deformed from a circular shape to an ellipsoidal cross section in order to increase the fill factor of the winding.

## Revendications

1. Machine électrique comprenant au moins un enroulement comprenant au moins un fil d'enroulement (2), le fil d'enroulement (2) comprenant une pluralité de brins (3) électriquement conducteurs individuels, et le fil d'enroulement (2) comprenant une gaine extérieure (4) électriquement isolante entourant tous les brins (3), **caractérisée en ce que** les brins individuels (3) du fil d'enroulement enroulé (2) sont déformés de manière à avoir une section transversale de brins elliptique afin d'augmenter la densité de remplissage de l'enroulement.

2. Machine électrique selon la revendication 1, **caractérisée en ce que** le fil d'enroulement enroulé (2) est déformé de manière à avoir une section transversale de brins elliptique afin d'augmenter la densité de remplissage de l'enroulement.

3. Machine électrique selon l'une quelconque des revendications précédentes, **caractérisée en ce que** les brins (3) de l'au moins un fil d'enroulement (2) ne sont pas isolés les uns par rapport aux autres.

4. Machine électrique selon l'une quelconque des revendications précédentes, **caractérisée en ce que** les brins (3) s'étendent de manière continue et sont aussi longs que le fil d'enroulement (2).

5. Machine électrique selon l'une quelconque des revendications précédentes, **caractérisée en ce que** les brins (3) sont disposés dans la gaine extérieure (4) de telle sorte que les brins (3) puissent effectuer un mouvement relatif les uns par rapport aux autres.

6. Machine électrique selon l'une quelconque des revendications précédentes, **caractérisée en ce que** le fil d'enroulement (2) se compose d'au moins 50 ou d'au moins 100 ou d'au moins 150 ou d'au moins 200 brins (3).

7. Machine électrique selon l'une quelconque des revendications précédentes, **caractérisée en ce que** les brins (3) se composent de cuivre ou d'aluminium.

8. Machine électrique selon l'une quelconque des revendications précédentes, **caractérisée en ce que** la gaine extérieure (4) est une gaine extérieure (4) extrudée et/ou un surmoulage en matière plastique et/ou un émaillage.

9. Machine électrique selon l'une quelconque des revendications précédentes, **caractérisée en ce qu'**un lubrifiant est disposé sur la gaine extérieure (4) et/ou entre les brins (3).

10. Moteur de réglage pour l'entraînement d'un élément réglable d'un véhicule automobile, comprenant une machine électrique selon l'une quelconque des revendications 1 à 9.

11. Entraînement pour un groupe auxiliaire d'un véhicule automobile, comprenant une machine électrique selon l'une quelconque des revendications 1 à 9.

12. Unité moteur/générateur pour l'entraînement d'un véhicule automobile, en particulier d'un véhicule automobile à entraînement hybride, comprenant une machine électrique selon l'une quelconque des revendications 1 à 9.

13. Procédé pour fabriquer une machine électrique comprenant au moins un enroulement, comprenant les étapes suivantes :
- fourniture d'un fil d'enroulement (2) comprenant une pluralité de brins individuels (3) électriquement conducteurs et non isolés les uns par rapport aux autres,
- application d'une gaine extérieure électriquement isolante (4) entourant tous les brins (3), les brins (3) étant disposés dans la gaine extérieure (4) de telle sorte que les brins (3) puissent effectuer un mouvement relatif les uns par rapport aux autres, et
- enroulement du fil d'enroulement (2) pour produire l'enroulement de la machine électrique, une contrainte de traction du fil d'enroulement (2) lors de l'enroulement étant sélectionnée de telle sorte qu'une section transversale du fil d'enroulement (2) et/ou des brins (3) se déforme d'une forme circulaire à une forme elliptique en section transversale afin d'augmenter la densité de remplissage de l'enroulement.
